**Europäisches Patentamt**

**European Patent Office**

**Office européen des brevets**

(19)

(11) Veröffentlichungsnummer: **0 113 868**
**B1**

(12) # EUROPÄISCHE PATENTSCHRIFT

(45) Veröffentlichungstag der Patentschrift:
16.03.88

(51) Int. Cl.⁴: **C 08 F 8/28**

(21) Anmeldenummer: **83112446.6**

(22) Anmeldetag: **10.12.83**

(54) Feinteilige Polyvinylacetale, Verfahren zu ihrer Herstellung und ihre Verwendung für Einbrennbeschichtungen.

(30) Priorität: **16.12.82 DE 3246605**

(43) Veröffentlichungstag der Anmeldung:
**25.07.84 Patentblatt 84/30**

(45) Bekanntmachung des Hinweises auf die Patenterteilung:
**16.03.88 Patentblatt 88/11**

(84) Benannte Vertragsstaaten:
**DE FR GB IT SE**

(56) Entgegenhaltungen:
**DE-B-1 081 229**
**DE-B-1 086 435**
**FR-A-2 401 941**

(73) Patentinhaber: **HOECHST AKTIENGESELLSCHAFT,
Postfach 80 03 20, D-6230 Frankfurt am Main 80
(DE)**

(72) Erfinder: **Hermann, Hans Dieter, Dr., Am
Dachsbau 7, D-6232 Bad Soden am Taunus (DE)**
Erfinder: **Hutten, Ulrich Martin, Dr., Philipp-
Kremer- Strasse 35, D-6233 Kelkheim (Taunus) (DE)**

EP 0 113 868 B1

## Beschreibung

Das Verfahren betrifft die Herstellung von feinteiligen Polyvinylacetalen mit einer mittleren Teilchengröße zwischen 0,5 und 10 μm in elektrolytarmer wäßriger Suspension und gegebenenfalls, unter Entwässerung der Suspension, in Pulverform sowie deren Verwendung für Einbrennbeschichtungen.

Pulverförmige Polymerisate gewinnen für Beschichtungen zunehmend an Bedeutung. Da sie im allgemeinen keine oder nur wenig Lösungsmittel enthalten, sind sie bei der Anwendung sehr umweltfreundlich.

Die Beschichtung mit trockenem Polymerisatpulver hat aber noch verschiedene Nachteile. Damit eine Haftung des Pulvers erreicht wird, müssen bei der Beschichtung die Unterlage und gegebenenfalls das Polymerisat erhitzt werden. Außerdem ist es schwierig, Beschichtungen mit glatter Oberfläche zu erhalten, da die Polymer- oder Harzkörner relativ grob sein sollten. Demgegenüber werden Beschichtungen aus wäßriger Dispersion schon seit langem hergestellt. Solche wäßrigen Dispersionen enthalten meist Polymerisate mit einer Teilchengröße unter 0,5 μm. Die Polymerisate haben vorwiegend eine Filmbildungstemperatur unter 20°C. Für die Metallbeschichtung müssen sie, verbunden mit erheblichem Aufwand, elektrolytarm hergestellt oder weitgehend von Elektrolyt befreit werden, z. B. durch Ultrafiltration (vgl. DE-OS 28 17 231). Liegt die Einfriertemperatur des Polymerisats über 20°C, so gelingt es im allgemeinen nicht, rißfreie Beschichtungen herzustellen, die sich bei höheren Temperaturen zu rißfreien Überzügen einbrennen lassen.

Günstiger verhalten sich dagegen wäßrige Polymerisatsuspensionen mit Teilchengrößen zwischen ca. 0,5 μm und 20 μm. Auch bei einer Einfriertemperatur des Polymerisats von über 20°C trocknen sie, z. B. auf Metallunterlagen, zu einem rißfreien Belag auf, der sich bei erhöhten Temperaturen zu einer glatten Beschichtung einbrennen läßt. Damit eine hohe Haftung auf Metall erreicht wird, sollte die wäßrige Suspension ebenfalls möglichst elektrolytfrei sein.

Die Herstellung solcher feinteiliger wäßriger Suspensionen ist nun allerdings in erheblichem Maße aufwendig.

Eine Möglichkeit ist z. B. das Mahlen von Polymerisaten oder Harzen. Diese Methode erfordert jedoch einen sehr hohen Sicherheits- und Energieaufwand.

Eine andere Möglichkeit ist die Herstellung von Polymerisatsuspensionen mit einer Teilchengröße zwischen 0,5 und 10 μm durch Emulsionspolymerisation. Diese Methode erfordert jedoch eine langwierige und aufwendige Polymerisationstechnik (vgl. DE-OS 24 16 446).

Es wurde nun überraschenderweise gefunden, daß man unter bestimmten Bedingungen bei der Acetalisierung von Polyvinylalkohol mit aliphatischen Aldehyden, die mindestens 3 C-Atome aufweisen, in wäßriger Phase direkt zu Polymerisatsuspensionen der gewünschten Teilchengröße zwischen 0,5 und 10 μm kommen kann. Die dabei resultierenden wäßrigen Suspensionen fallen bereits von vornherein mit relativ niedrigem Elektrolytgehalt an. Sie lassen sich außerdem leicht durch übliche Filtrationstechniken vollständig oder teilweise von Elektrolyten und anderen wasserlöslichen Bestandteilen befreien.

Gegenstand der vorliegenden Erfindung ist daher ein Verfahren zur Herstellung von feinteiligen Polyvinylacetalen mit einer mittleren Teilchengröße zwischen 0,5 und 10 μm in wäßriger elektrolytarmer oder elektrolytfreier Suspension oder gegebenenfalls, unter Entwässerung der Suspension, in Pulverform, durch Umsetzung einer wäßrigen Lösung von Polyvinylalkohol mit wenigstens einem aliphatischen Aldehyd mit mindestens 3 C-Atomen in Gegenwart eines sauren Katalysators und gegebenenfalls unter Zusatz von Emulgatoren, das dadurch gekennzeichnet ist, daß man die Acetalisierungsreaktion in Gegenwart von 0,1 bis 10 Gew.-%, bezogen auf den eingesetzten Polyvinylalkohol, eines vollständig oder teilweise verseiften Pfropfcopolymerisats von Vinylester, vorzugsweise Vinylacetat, auf Polyethylenoxid oder Polyethylenoxidderivaten durchführt.

Gegenstand der Erfindung ist weiterhin feinteiliges Polyvinylacetal aus Polyvinylalkohol und wenigstens einem aliphatischen Aldehyd mit mindestens 3 C-Atomen in wäßriger elektrolytarmer oder elektrolytfreier Suspension oder gegebenenfalls, unter Entwässerung der Suspension, in Pulverform, das dadurch gekennzeichnet ist, daß es 0,1 bis 10 Gew.-%, vorzugsweise 0,5 bis 10 Gew.-%, insbesondere 1 bis 3 Gew.-%, bezogen auf Polyvinylacetal, eines vollständig oder teilweise verseiften Pfropfcopolymerisats von Vinylester, insbesondere Vinylacetat, auf Polyethylenoxid oder Polyethylenoxidderivaten, welches im Gemisch mit dem Polyvinylalkohol acetalisiert wurde, enthält.

Feinteilige Polyvinylacetale sind dabei solche, deren mittlere Partikelgrößen zwischen 0,5 und 10 μm liegen.

Die Herstellung der erfindungsgemäß zu verwendenden vollständig oder teilweise verseiften Pfropfcopolymerisate kann nach bekannten Methoden erfolgen, z. B. durch Polymerisation von Vinylestern in Gegenwart von Polyethylenglykol nach der DE-PS 10 77 430 oder der DE-PS 10 84 917, und anschließende Verseifung bzw. Umesterung zum Polyvinylalkohol-Pfropfcopolymerisat nach der DE-PS 10 81 229.

Die Acetalisierung der so erhaltenen Polyvinylalkohol-Pfropfcopolymerisate ist nach der DE-PS 10 86 435 ebenfalls bekannt, wobei als Umsetzungsprodukte wäßrige Dispersionen mit Teilchengrößen unter 0,5 μm oder wäßrige Lösungen erhalten werden. Für die Metallbeschichtung sind diese Produkte wegen ihrer hohen Wasserempfindlichkeit jedoch nicht geeignet.

Es war daher um so überraschender, daß vollständig oder teilweise verseifte Pfropfcopolymerisate aus Polyethylenglykol und Vinylestern, in geringen Mengen dem Reaktionsgemisch bei der Acetalisierung von üblichem Polyvinylalkohol zugesetzt, die Teilchengröße des resultierenden Polyvinylacetals in gewünschter Weise herabsetzen, und zwar ohne daß die Wasserbeständigkeit der aus dem erhaltenen Polyvinylacetal hergestellten Einbrennbeschichtungen beeinträchtigt wird.

Die erfindungsgemäß eingesetzten vollständig oder teilweise verseiften Pfropfcopolymerisate enthalten vorzugsweise 1 - 50 Gew.-%, insbesondere 5.- 40 Gew.-%, Polyoxyethylenreste, wobei die Zahl der aneinander gebundenen Oxethyleneinheiten bevorzugt zwischen 5 und 5000, insbesondere zwischen 10 und 1000 liegen kann. Der restliche Anteil in den Pfropfcopolymerisaten besteht vorzugsweise zu 60 - 100 Gew.-% aus Vinylalkoholeinheiten und vorzugsweise zu 0-40 Gew.-% aus Vinylestereinheiten, insbesondere Vinylacetateinheiten, bezogen auf den genannten restlichen Anteil in den Pfropfcopolymerisaten. Daneben können noch bis zu 30 Gew.-% andere Monomereinheiten, bezogen auf den genannten restlichen Anteil in den Pfropfcopolymerisaten, wie Acrylester-, Vinylchlorid- und/oder Ethyleneinheiten in das Pfropfcopolymerisatmolekül eingebaut sein.

Das Molekulargewicht der erfindungsgemäß zu verwendenden vollständig oder teilweise verseiften Propfcopolymerisate kann in weiten Grenzen schwanken. Wegen der besseren Anwendbarkeit sind jedoch im allgemeinen relativ niedermolekulare vollständig oder teilweise verseifte Pfropfcopolymerisate vorzuziehen, beispielsweise solche, die nach DIN 53015 eine Viskosität zwischen 2 und 20 mPas, vorzugsweise zwischen 3 und 10 mPas aufweisen, gemessen an deren 4 %-igen wäßrigen Lösung bei 20°C. Bevorzugt sind die gut wasserlöslichen vollständig oder teilweise verseiften Pfropfcopolymerisate.

Erfindungsgemäß wird bei der Acetalisierung von Polyvinylalkohol das einzusetzende vollständig oder teilweise verseifte Pfropfcopolymerisat in wäßriger Lösung der wäßrigen Polyvinylalkohollösung vor der Umsetzung mit Aldehyden zugegeben. Dabei beträgt der Anteil an vollständig oder teilweise verseiftem Pfropfcopolymerisat vorzugsweise 0,1 - 10 Gew.-%, insbesondere 0,5 - 5 Gew.-%, bezogen auf den zur Acetalisierung eingesetzten Polyvinylalkohol. Besonders bevorzugt sind 1 - 3 Gew.-% vollständig oder teilweise verseiftes Pfropfcopolymerisat.

Zur Acetalisierung eignen sich als Ausgangspolyvinylalkohol prinzipiell alle bekannten teil- und vollverseiften Polyvinylalkohole. Vorzugsweise werden jedoch sogenannte hochverseifte, relativ niedermolekulare Polyvinylalkohole eingesetzt. Sie sollten vorzugsweise 0,5-3 Gew.-% Vinylacetateinheiten haben und ihre Viskosität, gemessen in 4 %-iger wäßriger Lösung bei 20°C nach DIN 53015, sollte zwischen 2 und 20 mPas, vorzugsweise zwischen 3 und 10 mPas liegen.

Die Umsetzung mit Aldehyden erfolgt in bekannter Weise in wäßriger Lösung, in der die Gesamtkonzentration an Polymeren vorzugsweise zwischen 1 und 20 Gew.-% beträgt und auch höher liegen kann.

Die Reaktion läßt sich mit allen aliphatischen Aldehyden mit mindestens 3 Kohlenstoffatomen durchführen. Vorzugsweise sind gesättigte aliphatische Aldehyde mit 3 - 20 Kohlenstoffatomen zur Umsetzung geeignet, wie Propionaldehyd, n-Butyr- und Isobutyraldehyd sowie Octan-und Isononanaldehyd. Besonders bevorzugt ist n-Butyraldeyhd.

Die verfahrensgemäß zu verwendenden aliphatischen Aldehyde mit mindestens 3 Kohlenstoffatomen können einzeln oder in Mischung untereinander zur Reaktion gebracht werden. Sie können auch bis zu 50 Gew.-%, bezogen auf die Gesamtmenge der eingesetzten Aldehyde, durch andere Aldehyde ersetzt werden, die mit Polyvinylalkohol unter Acetalbildung reagieren. Es sind dies z. B. aliphatische, cycloaliphatische oder aromatische Aldehyde, wie Formaldehyd, Acetaldehyd, Hexahydrobenzaldehyd oder Benzaldehyd, ferner Aldehyde mit reaktiven Gruppen wie Acrolein, Crotonaldehyd, Zimtaldehyd, Chloracetaldehyd, Chloral, Aminoacetaldehyd, p-Dimethylaminobenzaldehyd oder Glyoxylsäure. Bevorzugt werden bis zu 20 Gew.-% dieser Aldehyde im gesamten Aldehydgemisch eingesetzt, besonders bevorzugt sind bis zu 10 Gew.-%.

Die Acetalisierungsreaktion erfolgt in Gegenwart katalytisch wirkender starker Säuren, die in üblicher Konzentration eingesetzt werden, beispielsweise zwischen 0,1 und 10 Gew.-%, vorzugsweise 0,2 und 2 Gew.-%, bezogen auf die wäßrige Phase. Da die Säure zum Elektrolytgehalt der wäßrigen Phase beiträgt und in einigen Fällen auch zur Vergröberung der Polymerisatteilchen führen kann, empfichlt es sich, mit niedrigen Säurekonzentrationen zu arbeiten, die eine für die Praxis erforderliche Reaktionsgeschwindigkeit gerade noch ermöglichen. Als Säuren eignen sich insbesondere starke Mineralsäuren, wie z. B. HCl, $H_2SO_4$, $HNO_3$, $HClO_4$, $H_3PO_4$ und andere, ferner aromatische und aliphatische Sulfonsäuren. Vorzugsweise verwendet man eine der genannten Säuren zusammen mit einer emulgierend wirkenden langkettigen aliphatischen oder alkylaromatischen Sulfonsäure, wobei man bei Säureüberschuß auch Salze dieser Sulfonsäuren einsetzen kann.

In einer besonders bevorzugten Ausführungsform wird ein Gemisch aus Phosphorsäure und einer aliphatischen Alkylsulfonsäure mit 8 - 18 Kohlenstoffatomen eingesetzt. Die Anwendung dieses Katalysatorgemischs in einer Konzentration zwischen 0,4 und 1 Gew.-%, bezogen auf die wäßrige Phase, erlaubt die Herstellung von sehr gleichmäßigem feinteiligem Polyvinylacetal, das nahezu frei von groben Polymeranteilen ist. Das Verhältnis von Phosphorsäure zu Sulfonsäure kann dabei vorzugsweise zwischen 5 : 1 und 1 : 2 liegen.

Die Acetalisierungsreaktion kann in üblicher Weise in Gang gesetzt werden. Dabei können während der Reaktion der Aldehyd und/oder die Säure kontinuierlich oder portionsweise zur vorgelegten wäßrigen Lösung des Polyvinylalkohols und des vollständig oder teilweise verseiften Pfropfcopolymerisats gegeben werden. Bei Anwendung realtiv geringer Säuremengen können auch alle Komponenten unmittelbar zusammengegeben werden. Das Reaktionsgemisch muß ständig gerührt werden, wobei es vorteilhaft sein kann, während des Ausfallens der acetalisierten Polymeren aus der wäßrigen Phase heftig zu rühren. Die Reaktion kann bei den üblichen Temperaturen zwischen 0°C und dem Siedepunkt des Aldehyds bzw. des Wassers durchgeführt werden. Die obere Grenze der Reaktionstemperatur wird jedoch durch die Einfriertemperatur des aus dem Reaktionsgemisch ausfallenden Polyvinylacetalpolymeren bestimmt. Diese Temperatur darf keinesfalls überschritten werden, da sonst ein Zusammensintern des Polymerisats eintritt. Eine bevorzugte Ausführungsform ist es daher, die Acetalisierung bei tiefen Temperaturen, beispielsweise bei 0-20°C zu beginnen und später das Reaktionsgemisch auf geeignete höhere Temperaturen, beispielsweise auf 30-60°C, zu erwärmen und bei diesen Temperaturen die Reaktion bis zu dem gewünschten Acetalisierungsgrad zu Ende zu führen.

Der Acetalisierungsgrad des resultierenden Polymerisates wird durch das Verhältnis Aldehyd/Polyvinylalkohol, aber auch durch die Reaktionsdauer und die Reaktionstemperatur bestimmt. Er kann im üblichen Bereich, z. B. zwischen ca. 50 und 80 Mol-%, bezogen auf den Polyvinylalkohol, liegen. Vorzugsweise werden Polymerisate mit einem Acetalisierungsgrad von über 65 Mol-% hergestellt. Zur Charakterisierung des Polymerisates ist es am einfachsten, nach bekannten Methoden den Anteil an nicht acetalisierten Vinylalkoholeinheiten im acetalisierten Polymerisat in Gew.-% zu ermitteln. Dieser Anteil sollte zwischen 9 und 25 Gew.-%, vorzugsweise zwischen 10 und 20 Gew.-% liegen.

Vor und während der Acetalisierung kann es vorteilhaft sein, dem Reaktionsgemisch verschiedene Substanzen zuzusetzen. Als solche kommen in erster Linie phenolische Antioxidantien, Lichtstabilisatoren oder andere für die Stabilisierung von Polyvinylacetalen bekannte Verbindungen zur Anwendung. Sie können vorzugsweise in einer Konzentration zwischen 0,05 und 1 Gew.-%, bezogen auf das ausfallende acetalisierte Polymerisat, eingesetzt werden.

Ferner können überraschenderweise auch Pigmente und Füllstoffe bei der Acetalisierung anwesend sein. Bedingung ist hierbei, daß sich diese Zusätze im Reaktionsmedium inert verhalten, d.h. daß sie sich nicht nennenswert lösen und weder mit Säure noch mit Aldehyd in nennenswertem Umfang reagieren. Geeignete Pigmente sind z. B. Titandioxid und Eisenoxid. Geeignete Füllstoffe sind z. B Talkum oder Siliciumdioxid. Sie können insgesamt in Konzentrationen zwischen 1 und 100 Gew.-%, vorzugsweise 10 bis 50 Gew.-%, bezogen auf das ausfallende acetalisierte Polymerisat, zugesetzt werden.

Empfehlenswert ist ferner der Zusatz von Verlaufmitteln bei der Acetalisierung, welche die Filmbildung beim Einbrennen der Beschichtung erleichtern. Als solche Verlaufmittel sind prinzipiell alle Flüssigkeiten geeignet, die das Polymere lösen können und die in Wasser unlöslich und vorzugsweise schwerflüchtig sind. Geeignet sind beispielsweise die für Polyvinylacetale bekannten, über 100°C siedenden Lösungsmittel und Weichmacher, wie z. B. aromatische Kohlenwasserstoffe, Ester, Alkohole und Ether, beispielsweise Toluol, Xylol, Ethylglykolacetat, Dihexyladipat, Trioctylphosphat, Triethylenglykol-bis-2-ethylbuttersäureester, sowie insbesondere Verbindungen der Struktur $R-(OCH_2CH_2)_nOH$. Dabei bedeuten R einen hydrophoben aliphatischen oder alkylaromatischen Rest mit 8 - 30 Kohlenstoffatomen oder einen Polypropylenoxidrest und n eine ganze Zahl, vorzugsweise von 1 - 10, insbesondere von 1 - 4.

Diese als Verlaufmittel bezeichneten Verbindungen diffundieren in die Polymerisatteilchen und begünstigen den Verlauf von Beschichtungen beim Einbrennen. Gleichzeitig senken sie aber auch die Einfriertemperatur des Polymerisates. Ihre optimale Konzentration muß deshalb von Fall zu Fall entsprechend der Art des Polymerisats und der Reaktionsführung bei der Acetalisierung ermittelt werden. Im allgemeinen liegt sie zwischen 1 und 10 Gew.-%, bezogen auf das Polyvinylacetal.

Vorteilhaft kann häufig auch der Zusatz emulgierend wirkender Substanzen sein, insbesondere von anionischen und amphoteren Emulgatoren. Amphotere Emulgatoren sind u.a. z. B. unter der handelsüblichen Bezeichnung Amphoseife erhältlich. Mit diesen Emulgatoren kann die Bildung von groben Polymerisatteilchen zusätzlich unterdrückt und die mittlere Teilchengröße nach kleinen Teilchen hin verschoben werden, wodurch überraschenderweise die Wasserempfindlichkeit der Polyvinylacetalfilme praktisch nicht erhöht wird. Geeignete Emulgatoren sind zum Beispiel Alkansulfonate, Alkylphenylsulfonate, Alkylphosphonate und langkettige Betaine. Die emulgierend wirkenden Verbindungen werden gegebenenfalls vorzugsweise in Konzentrationen zwischen 0,1 und 5 Gew.-%, bezogen auf den eingesetzten Polyvinylalkohol, angewendet.

Das Polyvinylacetal fällt in stark saurer wäßriger Suspension an, deren Feststoffgehalt bevorzugt zwischen 5 und 25 Gew.-% liegt. Diese Suspension läßt sich durch übliche Methoden in ein lagerfähiges und elektrolytarmes Konzentrat überführen, beispielsweise durch Dekantieren, Zentrifugieren, Filtrieren, Auswaschen sowie durch Neutralisieren oder Alkalischstellen vor, während oder nach diesen Maßnahmen. Die jeweils erforderliche Auswaschintensität hängt von der Höhe und teilweise auch von der Art des Elektrolytanteils in der Rohsuspension ab.

Empfehlenswert ist z. B. die Druckfiltration durch ein feines Papier- oder Membranfilter, das Aufschlämmen des Filterkuchens in Wasser und die wiederholte Filtration. Sehr gut geeignet sind auch kontinuierliche Filtrationstechniken. Am Schluß der Filtration wird*) unter Wasserzusatz mit Alkalien, vorzugsweise Aminen, auf pH 7 - 10 eingestellt. Der feuchte Filterkuchen läßt sich mit üblichen Rührwerken leicht in Wasser resuspendieren. Die resultierende Suspension ist häufig noch bei Feststoffgehalten bis zu 70 Gew.-% fließfähig.

*)der Filterkuchen
Der bevorzugte Feststoffgehalt in den elektrolytarmen bzw. elektrolytfreien wäßrigen Polyvinylacetalsuspensionen beträgt 5 bis 70 Gew.-%, besonders bevorzugt 25 bis 60 Gew.-%, insbesondere 40 bis 60 Gew.-%, bezogen auf die gesamte wäßrige, elektrolytarme oder elektrolytfreie und gegebenenfalls noch Verlaufmittel und/oder Lösungsmittel und/oder Weichmacher und/oder Pigmente und/oder Füllstoffe enthaltende Suspension.

Es ist auch möglich, die feinteiligen Polyvinylacetale abzufiltrieren und zu trocknen oder die gegebenenfalls elektrolytfrei gewaschene Suspension einer Sprühtrocknung zu unterwerfen.

Die Polyvinylacetalteilchen haben eine Größe von 0,5 bis 10 μm ( = durchschnittlicher mittlerer Teilchendurchmesser). Sie können kugelförmig, oval oder stäbchenförmig sein und besitzen eine glatte Oberfläche.

Die feinteiligen Polyvinylacetale eignen sich für alle Anwendungen, die für diesen Polymerisattyp bekannt sind. In erster Linie dienen sie für Beschichtungen auf beliebigen beschichtungsfähigen Unterlagen oder Substraten, wie z. B. Holz, Glas, Baustoffen, Textilien, vorzugsweise aber Metallen. Die wäßrigen Polyvinylacetalsuspensionen trocknen rasch unter Bildung von rißfreien, weißen Belägen, die nicht oder nur wenig sintern und die sich durch Wasser wieder abwaschen lassen. Durch Einbrennen bei 90 - 200°C entstehen daraus glatte, porenfreie, gut haftende und wasserfeste Beschichtungen, die auch korrosionsschützend wirken können.

Die Erfindung wird durch die nachfolgenden Beispiele näher erläutert, ohne sich jedoch auf diese zu beschränken.

**Beispiel 1**

Als Ausgangsmaterial wurde ein Polyvinylalkohol verwendet, der 2 Gew.-% Vinylacetateinheiten enthielt und dessen 4 %-ige wäßrige Lösung bei 20°C eine Viskosität von 9,1 mPas hatte. 400 g einer 15 gew.-%-igen Lösung dieses Polyvinylalkohols wurden zusammen mit 34 g n-Butyraldehyd auf 16°C gekühlt. Bei dieser Temperatur wurden im Verlauf von 20 Minuten unter Rühren eine Lösung von 1 g Dodecylbenzolsulfonsäure, 0,4 g Chlorwasserstoff und 1,2 g eines teilverseiften Pfropfcopolymerisats in 144 ml Wasser zugegeben. Das Pfropfcopolymerisat bestand aus 30.Gew.-% Polyethylenglykoleinheiten vom Molekulargewicht 10 000, 13 Gew.-% Vinylacetateinheiten und 57 Gew.-% Vinylalkoholeinheiten. Seine 4 %-ige wäßrige Lösung zeigte bei 20°C eine Viskosität von 3,5 mPas.

Nach Ende der Zugabe wurde das Reaktionsgemisch unter ständigem Rühren noch 100 Minuten bei 16°C gehalten, dann in 60 Minuten auf 45°C erwärmt und noch 180 Minuten bei dieser Temperatur gehalten. Es resultierte eine Polyvinylbutyralsuspension mit Teilchengrößen von 6 - 10 μm. Das Polyvinylbutyral hatte einen Anteil an nicht acetalisierten Vinylalkoholeinheiten von 21,2 Gew.-%.

**Beispiel 2**

In analoger Weise wie in Beispiel 1 beschrieben wurden umgesetzt:
400 g einer 15 %-igen wäßrigen Lösung von Polyvinylalkohol (Viskosität, 4 %-ig in H$_2$O bei 20°C gemessen, 11,5 mPas, Gehalt an Vinylacetateinheiten 2,5 Gew.-%)

44 g. n-Butyraldehyd
2,4 g Pentadecylsulfonsäure
0,8 g teilweise verseiftes Propfcopolymerisat wie in Bsp.1 beschrieben
in 150 ml Wasser
Es resultierte ein feinteiliges Polyvinylbutyral mit Teilchengrößen von 0,5 - 5 μm und einem Gehalt an nicht acetalisierten Vinylalkoholeinheiten von 15,6 Gew.-%.

## Beispiel 3

Von einem Polyvinylalkohol, der eine Viskosität von 4,5 mPas, gemessen in 4 %-iger wäßriger Lösung bei 20°C, hatte und der einen Anteil von 3 Gew.-% Vinylacetateinheiten besaß, wurde eine 13 gew.-%-ige Lösung in Wasser hergestellt. 2300 g dieser Lösung wurden mit 60 g der 10 gew.-%-igen wäßrigen Lösung eines teilweise verseiften Pfropfcopolymerisats und 220 g n-Butyraldehyd auf 12°C gekühlt. Das teilweise verseifte Pfropfcopolymerisat enthielt 25 Gew.-% Polyethylenglykoleinheiten vom Molekulargewicht 20 000, 18 Gew.-% Vinylacetateinheiten und 57 Gew.-% Vinylalkoholeinheiten. Anschließend wurde der Ansatz unter Rühren mit 15 g Triethylenglykolmono-nonylphenylether und einer Lösung von 5 g Pentadecylsulfonsäure und 10 g Phosphorsäure in 400 ml Wasser versetzt. Das Gemisch wurde 150 Minuten bei 12°C gerührt, in 60 Minuten auf 40°C erwärmt und 180 Minuten bei dieser Temperatur gehalten. Die resultierende Suspension wurde durch zweimaliges Zentrifugieren und Aufschlämmen weitgehend von Elektrolyt befreit, auf 52 % Feststoffgehalt aufkonzentriert und durch Zusatz von Triethylamin auf pH 9 eingestellt. Die Polymerisatteilchen hatten Teilchengrößen von 1 - 5 µm. und einen Gehalt an nicht acetalisierten Vinylalkoholeinheiten von 11 Gew.-%.

Ein Überzug auf Glas aus dieser Suspension mit einer Naßfilmdicke von 150 µm trocknete rasch zu einem weißen Belag auf, der sich in 5 Minuten bei 120°C zu einem homogenen Film einbrennen ließ.

## Beispiel 4

In 4160 g einer 14,4 %-igen wäßrigen Lösung von Polyvinylalkohol, der in 4 %-iger wäßrige Lösung bei 20°C eine Viskosität von 4,7 mPas besaß und der einen Anteil von 2,5 Gew.-% Vinylacetateinheiten hatte, wurden unter Zusatz von 120 g einer 10 %-igen wäßrigen Lösung des teilweise verseiften Pfropfcopolymerisats von Beispiel 3, 1 g Natriumpolyphosphat, 30 g Isotridecyl-mono-triethylenglykolether und 1000 g Wasser, 225 g Titandioxid unter heftigem Rühren dispergiert.

Anschließend wurden dem Gemisch 440 g n-Butyraldehyd zugegeben, welcher 6 g 2,6-Ditert.butyl-p-kresol gelöst enthielt. Der Ansatz wurde auf 10°C gekühlt und die Acetalisierung durch Zusatz von 20 g Pentadecylsulfonsäure und 20 g Phosphorsäure in 180 g Wasser in Gang gebracht. Der Temperaturverlauf bei der Reaktion war 150 Minuten 10°C, innerhalb 60 Minuten Erwärmen auf 40°C und 180 Minuten 40°C. Nach beendeter Reaktion wurde die resultierende Suspension durch mehrmaliges Filtrieren und Aufschlämmen weitgehend von Elektrolyt befreit, auf 48 Gew.-% Feststoffgehalt aufkonzentriert und mit Triethanolamin auf pH 9 eingestellt. Die Größe der Polymerisatteilchen lag im Bereich von 0,5 - 5 µm.

Überzüge der so erhaltenen Polyvinylbutyralsuspension mit 100 µm Naßfilmdicke bildeten auf gereinigtem Stahlblech glatte und rißfreie Beläge, die sich durch Wasser leicht wieder abwaschen ließen. Bei 150°C konnten diese Beläge zu weißen, rißfreien und fest haftenden Überzügen eingebrannt werden.

## Beispiel 5

Von dem nach Beispiel 2 verwendeten Polyvinylalkohol wurde eine 15 gew.-%-ige Lösung in Wasser hergestellt. In 4000 g dieser Lösung wurden 5 g feinteiliges $SiO_2$ eingerührt. Anschließend wurden nacheinander zugegeben:

180 g einer 10 %-igen wäßrigen Lösung eines hochverseiften Pfropfcopolymerisats, bestehend aus 30 Gew.-% Polyethylenglykoleinheiten vom Molekulargewicht 2000, 8 Gew.-% Vinylacetateinheiten und 62 Gew.-% Vinylalkoholeinheiten

4 g Amphoseife in 100 g Wasser
420 g n-Butyraldehyd
40 g Toluol und
40 g Isotridecyl-mono-triethylenglykolether.

Die Acetalisierungsreaktion, die in einem 12 l-Stutzen mit Blattrührer bei 400 Upm ablief, wurde durch Zugabe von 10 g Octadecylsulfonsäure und 30 g Phosphorsäure in 1200 g Wasser in Gang gesetzt.

Der Temperaturverlauf bei der Reaktion war derselbe wie in Beispiel 4 beschrieben. Die Aufarbeitung und Neutralisierung der resultierenden Suspension erfolgten ebenfalls analog zu Beispiel 4.

Die erhaltene Suspension hatte einen Feststoffgehalt von 56 Gew.-% bei guter Fließfähigkeit und einer mittleren Teilchengröße von 3 µm.

Der Gehalt an nicht acetalisierten Vinylalkoholeinheiten im resultierenden Polyvinylbutyral lag bei 13,1 Gew.-%. Aus der Suspension konnten glatte und rißfreie Beschichtungen hergestellt werden.

## Beispiel 6

Von dem in Beispiel 4 eingesetzten Polyvinylalkohol wurde eine 14,6 gew.-%-ige Lösung in Wasser hergestellt. 2050 g dieser Lösung wurden mit 60 g einer 10 gew.-%-igen Lösung eines teilverseiften Pfropfcopolymerisats, bestehend aus 25 Gew.-% Polyethylenglykoleinheiten vom Molekulargewicht 20 000, 18 Gew.-% Vinylacetateinheiten und 57 Gew.-% Vinylalkoholeinheiten, versetzt. Anschließend wurden 376 g Isononanaldehyd und 15 g Isotridecylmonotriethylenglykolether zugegeben, und das Gemisch wurde unter kräftigem Rühren auf 10°C abgekühlt. Bei dieser Temperatur wurde die Acetalisierungsreaktion durch Zugabe von 15 g Pentadecylsulfonsäure und 10 g Phosphorsäure in 800 ml Wasser in Gang gebracht. Der Ansatz wurde zunächst 5 Stunden bei 10°C gerührt, dann in einer Stunde auf 40°C erwärmt und 2 Stunden bei dieser Temperatur gehalten.

Es resultierte eine feinteilige Suspension von Polyvinylisononanal mit einer mittleren Teilchengröße von 2 µm, deren Feststoffanteil sich unter Entwässern auf einer feinporigen Glasfilternutsche abfiltrieren ließ. Es wurde aus dem Filterkuchen eine konzentrierte Suspension hergestellt, aus der nach Auftragen auf eine Glasplatte und Einbrennen rißfreie und gut gesinterte Filme erhalten werden konnten.

**Beispiel 7**

2375 g einer 8 gew.-%-igen wäßrigen Lösung des in Beispiel 2 verwendeten Polyvinylalkohols wurden mit 45 g einer 10 gew.-%-igen wäßrigen Lösung des in Beispiel 6 verwendeten teilverseiften Pfropfcopolymerisats versetzt. Nach Zugabe von 139 g n-Butyraldehyd wurde die Mischung auf 10°C gekühlt und der Ansatz mit 5 ml konzentrierter Salzsäure in 385 ml Wasser versetzt. Das Reaktionsgemisch wurde 2 1/2 Stunden bei 10°C gerührt, während einer Stunde auf 40°C erwärmt und 5 Stunden bei 40°C gehalten. Die resultierende Polyvinylbutyralsuspension bestand aus kugelförmigen Teilchen, deren Durchmesser zwischen 0,5 und 5 µm lag.

Die Suspension wurde wie in Beispiel 4 beschrieben aufgearbeitet. Bei Zimmertemperatur daraus hergestellte Filme waren weiß, glatt, rißfrei und ließen sich mit Wasser wieder abwaschen. Bei 180°C konnten sie zu klaren, gut haftenden Überzügen eingebrannt werden.

**Patentansprüche**

1. Verfahren zur Herstellung von feinteiligen Polyvinylacetalen mit einer mittleren Teilchengröße zwischen 0,5 und 10 µm in wäßriger elektrolytarmes oder elektrolytfreies Suspension oder gegebenenfalls, unter Entwässerung der Suspension, in Pulverform, durch Umsetzung einer wäßriger Lösung von Polyvinylalkohol mit wenigstens einem aliphatischen Aldehyd mit mindestens 3 C-Atomen in Gegenwart eines sauren Katalysators und gegebenenfalls unter Zusatz von Emulgatoren, dadurch gekennzeichnet, daß man die Acetalisierungsreaktion in Gegenwart von 0,1 bis 10 Gew.-%, bezogen auf den eingesetzten Polyvinylalkohol, eines vollständig oder teilweise verseiften Pfropfcopolymerisats von Vinylester auf Polyethylenoxid oder Polyethylenoxidderivaten durchführt.

2. Verfahren nach Anspruch 1, dadurch gekennzeichnet, daß das vollständig oder teilweise verseifte Pfropfcopolymerisat aus 1 bis 50 Gew.-% Polyoxyethylenresten, und der restliche Anteil in dem Pfropfcopolymerisat zu 60 bis 100 Gew.-% aus Vinylalkoholeinheiten und zu 0 bis 40 Gew.-% aus Vinylestereinheiten besteht.

3. Verfahren nach einem der Ansprüche 1 oder 2, dadurch gekennzeichnet, daß in den Polyoxyethylenresten die Zahl der aneinander gebundenen Oxyethyleneinheiten 5 bis 5000 beträgt.

4. Verfahren nach einem der Ansprüche 1 bis 3, dadurch gekennzeichnet, daß der neben den Polyoxyethylenresten noch vorhandene restliche Anteil in dem Pfropfcopolymerisat bis zu 30 Gew.-% aus anderen Monomereinheiten aus der Gruppe Acrylester-, Vinylchlorid- und/oder Ethyleneinheiten besteht.

5. Verfahren nach einem der Ansprüche 1 bis 4, dadurch gekennzeichnet, daß man dem Reaktionsgemisch ein Verlaufmittel und/oder ein Lösungsmittel und/oder einen Weichmacher für das resultierende Polyvinylacetalpolymerisat und/oder inerte Pigmente und/oder Füllstoffe zusetzt.

6. Polyvinylacetal mit eines mittleren Teilchengröße zwischen 0,5 und 10 µm aus Polyvinylalkohol und wenigstens einem aliphatischen Aldehyd mit mindestens 3 C-Atomen in wäßriger elektrolytarmes oder elektrolytfreies Suspension oder gegebenenfalls in Pulverform, dadurch gekennzeichnet, daß es 0,1 bis 10 Gew.-%, bezogen auf Polyvinylacetal, eines vollständig oder teilweise verseiften Pfropfcopolymerisats von Vinylester auf Polyethylenoxid oder Polyethylenoxidderivaten, welches im Gemisch mit dem Polyvinylalkohol acetalisiert wurde, enthält.

7. Polyvinylacetal nach Anspruch 6, dadurch gekennzeichnet, daß es in wäßriger, elektrolytarmer oder elektrolytfreier Suspension vorleigt, die 40 bis 60 Gew.-% Acetalpolymerisat enthält.

8. Polyvinylacetal nach einem der Ansprüche 6 oder 7, dadurch gekennzeichnet, daß es Verlaufmittel und/oder Lösungsmittel und/oder Weichmacher und/oder Pigment und/oder Füllstoff enthält, wobei im Falle der Suspensionsform der Gesamtfeststoffgehalt 5 bis 70 Gew -% bezogen auf die gesamte wäßrige elektrolytarme oder elektrolytfreie Suspension, beträgt.

9. Verwendung von Polyvinylacetal nach einem der Ansprüche 6 bis 8, insbesondere aus elektrolytarmer oder elektrolytfreier wäßriger Suspension, für Einbrennbeschichtungen auf beliebigen beschichtungsfähigen Unterlagen oder Substraten, vorzugsweise auf Holz, Glas, Baustoffen, Textilien, insbesondere auf Metallen.

## Claims

1. A process for preparing a finely divided polyvinyl acetal having an average particle size between 0.5 and 10 μm in an aqueous, low-electrolyte or electrolyte-free suspension or, if desired, by dewatering the suspension, in powder form, by reacting an aqueous solution of polyvinyl alcohol, in the presence of an acidic catalyst and in the absence or presence of emulsifiers, with at least one aliphatic aldehyde having at least 3 carbon atoms, which comprises performing the acetalization reaction in the presence of 0.1 to 10 % by weight, based on the polyvinyl alcohol used, of a completely or partially hydrolyzed graft copolymer of vinyl ester on polyethylene oxide or polyethylene oxide derivatives.

2. The process as claimed in claim 1, wherein the completely or partially hydrolyzed graft copolymer comprises 1 to 50 % by weight of polyoxyethylene radicals, and the remaining proportion in the graft copolymer comprises 60 to 100 % by weight of vinyl alcohol units and 0 to 40 % by weight of vinyl ester units.

3. The process as claimed in either of claims 1 and 2, wherein the number of oxyethylene units bonded to one another in the polyoxyethylene radicals is 5 to 5 000.

4. The process as claimed in any one of claims 1 to 3, wherein that proportion in the graft copolymer which is present in addition to the polyoxyethylene radicals comprises up to 30 % by weight of other monomer units from the group consisting of acrylic ester, vinyl chloride and/or ethylene units.

5. The process as claimed in any one of claims 1 to 4, wherein the reaction mixture has added to it a flow-control agent and/or a solvent and/or a plasticizer for the resulting polyvinyl acetal polymer and/or inert pigments and/or fillers.

6. A polyvinyl acetal having an average particle size between 0.5 and 10 μm which is prepared in the form of an aqueous low-electrolyte or electrolyte-free suspension or, if desired, in powder form from polyvinyl alcohol and at least one aliphatic aldehyde having at least 3 carbon atoms, and which contains 0.1 to 10 % by weight, based on polyvinyl acetal, of a completely or partially hydrolyzed vinyl ester copolymer grafted onto polyethylene oxide or polyethylene oxide derivatives and acetalized in the mixture with the polyvinyl alcohol.

7. A polyvinyl acetal as claimed in claim 6, which is in the form of an aqueous, low-electrolyte or electrolyte-free suspension which contains 40 to 60 % by weight of acetal polymer.

8. A polyvinyl acetal as claimed in either of claims 6 or 7, which contains flow-control agent and/or solvent and/or plasticizer and/or pigment and/or filler, where in the case of a suspension the total solids content is 5 to 70 % by weight, based on the total aqueous, low-electrolyte or electrolyte-free suspension.

9. Use of polyvinyl acetal as claimed in any one of claims 6 to 8, in particular from a low-electrolyte or electrolyte-free aqueous suspension, for baked coatings on any coatable base or substrate, preferably on wood, glass, building materials, textiles and, in particular, on metals.

## Revendications

1. Procédé pour préparer des poly-(vinyl-acétals) en fines particules ayant une granularité moyenne comprise entre 0,5 et 10 μm, sous la forme d'une suspension aqueuse pauvre en électrolytes ou dépourvue d'électrolytes, ou éventuellement, avec déshydratation de la suspension, sous la forme d'une poudre, par réaction d'une solution aqueuse de poly-(alcool vinylique) avec au moins un aldéhyde aliphatique contenant au moins 3 atomes de carbone, en présence d'un catalyseur acide et, éventuellement, d'émulsionnants, procédé caractérisé en ce qu'on effectue la réaction d'acétalisation en présence de 0,1 à 10 % en poids, par rapport au poly-(alcool vinylique) mis en jeu, d'un copolymère greffé totalement ou partiellement saponifié, d'un ester vinylique sur un poly-oxiranne ou sur des dérivés de poly-oxirannes.

2. Procédé selon la revendication 1 caractérisé en ce que le copolymère greffé, totalement ou partiellement saponifié, est constitué de 1 à 50 % en poids de radicaux de poly-(oxy-éthylènes), et la partie restante du copolymère greffé est constituée de 60 à 100 % en poids de motifs d'alcool vinylique et de 0 à 40 % en poids de motifs d'un ester vinylique.

3. Procédé selon l'une des revendications 1 et 2, caractérisé en ce que, dans les radicaux de poly-(oxyéthylènes), le nombre des motifs oxy-éthylènes reliés les uns aux autres est compris entre 5 et 5000.

4. Procédé selon l'une quelconque des revendications 1 à 3, caractérisé en ce que la partie restante du copolymère greffé, c'est-à-dire la partie encore présente à côté des radicaux de poly-(oxy-éthylènes), est constituée d'au plus 30 % en poids d'autres motifs monomères pris dans l'ensemble constitué par les motifs d'esters acryliques, de chlorure de vinyle et/ou d'éthylène.

5. Procédé selon l'une quelconque des revendications 1 à 4, caractérisé en ce qu'on ajoute au mélange réactionnel un agent de nivellement et/ou un solvant et/ou un plastifiant pour le poly-(vinyl-acétal) formé et/ou des pigments inertes et/ou des charges.

6. Poly-(vinyl-acétal) ayant une granularité moyenne comprise entre 0,5 et 10 μm, dérivant d'un poly(alcool vinylique) et d'au moins un aldéhyde aliphatique à au moins 3 atomes de carbone, sous la forme d'une suspension aqueuse pauvre en électrolytes ou dépourvue d'électrolytes ou, éventuellement, sous la forme d'une poudre, poly-(vinyl-acétal) caractérisé en ce qu'il contient de 0,1 à 10 % en poids, par rapport au poly-(vinyl-acétal), d'un copolymère greffé, totalement ou partiellement saponifié, d'un ester vinylique sur un poly-oxiranne ou des dérivés de poly-oxirannes, copolymère greffé qui a été acétalisé en mélange avec le poly-(alcool vinylique).

7. Poly-(vinyl-acétal) selon la revendication 6, caractérisé en ce qu'il est sous la forme d'une suspension aqueuse pauvre en électrolytes ou dépourvue d'électrolytes qui contient de 40 à 60 % en poids du poly-acétal.

8. Poly-(vinyl-acétal) selon l'une des revendications 6 et 7, caractérisé en ce qu'il contient un agent de nivellement et/ou un solvant et/ou un plastifiant et/ou un pigment et/ou une charge, la teneur totale en matière solide, dans le cas de la suspension étant de 5 à 70 % en poids par rapport à l'ensemble de la suspension aqueuse pauvre en électrolytes ou dépourvue d'électrolytes.

9. Application du poly-(vinyl-acétal) selon l'une quelconque des revendications 6 à 8, plus particulièrement de la suspension aqueuse pauvre en électrolytes ou dépourvue d'électrolytes, pour la réalisation de revêtements à cuire sur des subjectiles ou des substrats quelconques aptes à être revêtus, de préférence sur le bois, le verre, des matériaux de construction, des textiles et, plus spécialement, des métaux.